# FASCICULE DE BREVET EUROPEEN

(11) **EP 1 989 104 B1**
(45) Date de publication et mention de la délivrance du brevet: **16.11.2011**
(21) Numéro de dépôt: 07731001.9
(22) Date de dépôt: 19.02.2007
(51) Int. Cl.: B64C 13/50

(54) **SYSTEME DE COMMANDE ELECTRIQUE POUR UNE GOUVERNE DE DIRECTION D'UN AVION**
ELEKTRISCHES STEUERSYSTEM FÜR EINE FLUGZEUGLENKSCHAUFEL
ELECTRICAL CONTROL SYSTEM FOR AN AIRCRAFT STEERING VANE

(30) Priorité: 27.02.2006 FR 0601671
(43) Date de publication de la demande: 12.11.2008
(73) Titulaire: AIRBUS OPERATIONS (SAS), 31060 Toulouse (FR); Airbus SAS, 31700 Blagnac (FR)
(72) Inventeur: ROUGELOT, Christophe, F-31100 Toulouse (FR); RONCERAY, Didier, F-31820 Pibrac (FR)
(74) Mandataire: Hauer, Bernard
(86) Numéro de dépôt international: PCT/FR2007/000290
(87) Numéro de publication internationale: WO 2007/096507

(56) Documents cités:
- EP-A- 1 396 421
- EP-A1- 0 763 465
- EP-A1- 1 160 158
- US-A- 5 170 969

## Description

La présente invention concerne un système de commande électrique pour une gouverne de direction d'un avion, en particulier d'un avion de transport.

On sait que, afin d'améliorer les performances (consommation de carburant, niveau de bruit, ...) d'un avion, sans diminuer la charge utile transportée, les constructeurs sont amenés à diminuer le plus possible la masse de l'avion, c'est-à-dire la masse de la structure, d'organes, d'équipements, ... dudit avion.

A cet effet, il peut être intéressant de diminuer la masse d'éléments stabilisateurs tels que la dérive (c'est-à-dire le plan fixe de l'empennage vertical de l'avion) qui est destinée à assurer la stabilité de route de l'avion et qui porte la gouverne de direction (c'est-à-dire un volet mobile qui est monté sur la dérive et qui est manoeuvrable dans le but de modifier la direction de l'avion). De façon usuelle, une gouverne de direction est montée rotative autour d'un axe pour pouvoir prendre n'importe quelle position angulaire de braquage à l'intérieur d'une plage de débattement qui est limitée par une première et une seconde limites de débattement (ou première et seconde butées).

On sait qu'un élément stabilisateur d'un avion est dimensionné en tenant compte des efforts maximaux auxquels il est susceptible d'être soumis lors des différentes configurations de vol de cet avion. Par conséquent, pour limiter la masse d'un tel élément stabilisateur et donc également la masse de l'avion, une solution est de réduire les efforts auxquels cet élément stabilisateur est susceptible d'être soumis au cours d'un vol.

A cet effet, on connaît par le document FR-2 809 373 de la demanderesse, un système de commande électrique pour une gouverne de direction d'un avion, grâce auquel il est possible de limiter les charges latérales appliquées en manoeuvre sur ladite gouverne de direction et donc de réduire le dimensionnement et la masse dé cette dernière, sans pour autant réduire les qualités de vol de l'avion ou la sécurité de vol.

Pour ce faire, ledit système de commande comporte :
- un palonnier actionné par le pilote et associé à un transducteur délivrant un ordre électrique de pilotage représentatif de l'action du pilote sur ledit palonnier ;
- un actionneur recevant un ordre de commande dérivé dudit ordre de pilotage et déplaçant ladite gouverne de direction autour de son axe de rotation ; et
- entre ledit palonnier et ledit actionneur, des moyens de filtrage du type passe-bas recevant ledit ordre de pilotage dudit transducteur et engendrant ledit ordre de commande pour ledit actionneur, la constante de temps desdits moyens de filtrage étant d'autant plus élevée que l'amplitude dudit ordre de pilotage correspond à une fraction plus grande de la valeur maximale de débattement de la gouverne de direction.

Ainsi, ce système de commande connu introduit, dans les ordres de pilotage au palonnier, un filtrage non linéaire qui dépend du débattement disponible pour la gouverne de direction, ce filtrage étant d'autant plus important que ladite gouverne de direction s'approche des butées limitant le débattement maximal, ce qui limite les charges appliquées à ladite gouverne et permet donc de réduire le dimensionnement et la masse de cette dernière.

Toutefois, le réglage dudit filtrage étant identique sur tout le domaine de vol de l'avion, ledit filtrage dépend de conditions liées à l'ordre de braquage de la gouverne, mais ne dépend pas des conditions de vol de l'avion.

En revanche, par le document FR-2 844 251 due la demanderesse, on connaît un système de commande électrique pour une gouverne qui permet de limiter à un effort maximal l'effort auquel est soumis un élément stabilisateur (tel qu'une dérive), et ceci quelles que soient les conditions de vol et les manoeuvres de l'avion.

Toutefois, un tel système de commande usuel ne permet pas de tirer profit des performances maximales de la gouverne de direction dans toutes les conditions de déplacement de l'avion, et en particulier lors d'un roulement au sol, notamment avec un fort vent latéral engendrant un dérapage important. En effet, dans une telle situation, la gouverne de direction doit non seulement guider l'avion conformément à l'ordre de commande commandé par le pilote via le palonnier, mais également s'opposer à ce vent latéral. Aussi, en raison des limites de débattement (droite et gauche) de la gouverne de direction, il peut arriver dans une telle situation que la gouverne de direction soit amenée à l'une de ces limites de débattement sans pour autant être en mesure de réaliser complètement ses objectifs (concernant la commande de la direction de l'avion). Cette limite de débattement ainsi atteinte de la plage de débattement est trop faible et restreint donc dans cette situation la commande de la direction de l'avion, alors que l'autre limite de débattement n'est jamais atteinte.

Par conséquent, un système de commande usuel, tel que précité, ne permet pas de toujours diriger de façon complètement satisfaisante l'avion dans toutes les conditions de déplacement, en particulier par fort vent latéral au sol.

La présente invention concerne un système de commande électrique pour une gouverne de direction d'un avion selon la revendication 1, qui permet de remédier aux inconvénients précités.

Ainsi, grâce à l'invention, on fait varier lesdites première et seconde limites de débattement, et ceci au moins partiellement de façon dissymétrique, en fonction des valeurs courantes desdits paramètres de vol qui sont représentatifs des conditions de déplacement de l'avion (comme précisé ci-dessous). Par conséquent, on peut adapter la plage de débattement de la gouverne de direction (et ainsi l'efficacité de cette dernière) auxdites conditions de déplacement effectives.

Bien que non exclusivement, le système de commande conforme à l'invention est particulièrement avantageux lorsque l'avion roule au sot et qu'il est soumis à un fort vent latéral. Dans ce cas, ledit système de commande peut être formé de manière à déplacer plus l'une des limites de débattement (à savoir celle qui est du côté permettant à la gouverne de direction de s'opposer audit vent latéral) de manière à augmenter la plage de débattement de la gouverne de direction plus du côté de cette limite de débattement que de l'autre côté, ce qui permet d'augmenter l'efficacité de la commande de direction de l'avion dans cette situation et de limiter les charges de l'autre côté.

Dans un mode de réalisation particulier, ledit ensemble de sources d'informations comporte au moins certains des moyens suivants :
- un moyen pour déterminer la phase de déplacement de l'avion ;
- un moyen pour déterminer la vitesse de l'avion ;
- un moyen pour déterminer le nombre de Mach de l'avion ;
- un moyen pour déterminer l'altitude de l'avion ;
- un moyen pour déterminer la configuration aérodynamique de l'avion ;
- un moyen pour déterminer l'angle de dérapage de l'avion ;
- un moyen pour déterminer la poussée engendrée par les moteurs de l'avion ;
- un moyen pour déterminer des interactions entre des braquages de différentes surfaces de contrôle de l'avion ; et
- un moyen pour déterminer la vitesse de lacet de l'avion.

En outre, avantageusement :
- ledit second moyen comporte une base de données contenant des courbes de variations desdites première et seconde limites de débattement en fonction de valeurs desdits paramètres de vol ; et/ou
- lesdits premier et second moyens font partie d'une unité de calcul.

Les figures du dessin annexé feront bien comprendre comment l'invention peut être réalisée. Sur ces figures, des références identiques désignent des éléments semblables.

La figure 1 est le schéma synoptique d'un système de commande conforme à l'invention.

La figure 2 est un graphique illustrant des variations des limites de débattement de la plage de débattement d'une gouverne de direction, dans des conditions de déplacement particulières de l'avion.

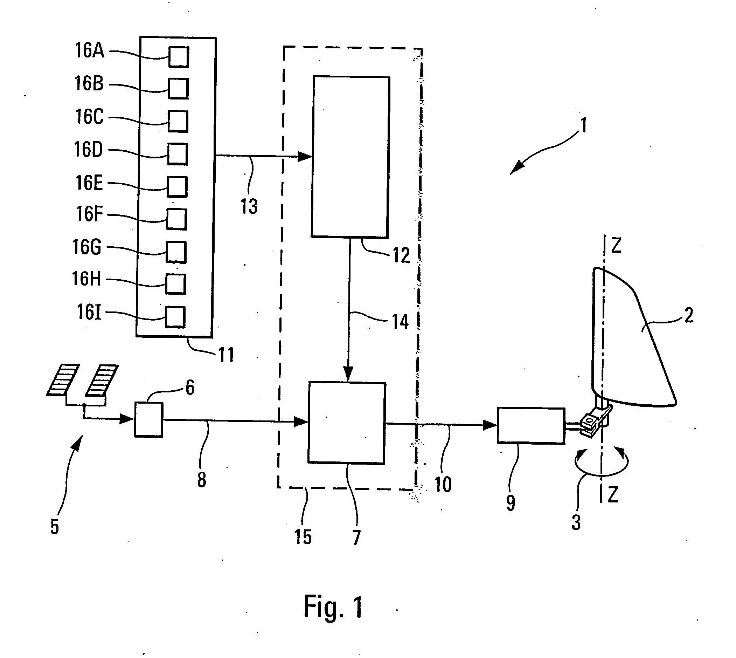

Le système de commande électrique 1, conforme à la présente invention et représenté schématiquement sur la figure 1, est destiné à l'actionnement d'une gouverne de direction 2 d'un avion, qui est montée rotative dans les deux sens autour d'un axe vertical Z-Z, de la facon symbolisée par une double flèche 3. Ladite gouverne de direction 2 peut prendre n'importe quelle position angulaire autour dudit axe Z-Z à l'intérieur d'une plage de débattement, qui s'étend de part et d'autre d'une position aérodynamiquement neutre de ladite gouverne de direction 2 et qui est limitée par une première limite de débattement L1 et par une seconde limite de débattement L2.

Ledit système de commande électrique 1 d'un avion, par exemple d'un avion de transport, est du type connu, comportant :
- un palonnier 5 qui est susceptible d'être actionné par un pilote de l'avion, et qui est associé à un transducteur 6 délivrant un ordre électrique de commande (relatif au braquage de la gouverne de direction 2) représentatif de l'actionnement dudit palonnier 5 ;
- un moyen de calcul 7 qui est relié par l'intermédiaire d'une liaison électrique 8 audit transducteur 6 et qui est destiné à déterminer, à partir dudit ordre de pilotage reçu, en tenant compté desdites première et seconde limites de débattement L1 et L2, un ordre de braquage permettant d'amener ladite gouverne de direction 2 à une position située entre lesdites première et seconde limites de débattement L1 et L2 et dépendant dudit ordre de pilotage ; et
- un actionneur 9 usuel, qui reçoit cet ordre de braquage par l'intermédiaire d'une liaison électrique 10 et qui déplace ladite gouverne de direction 2 autour dudit axe Z-Z, en fonction dudit ordre de braquage reçu.

Selon l'invention, ledit système 1 comporte de plus :
- un ensemble 11 1 de sources d'informations précisées ci-dessous, qui sont susceptibles d'engendrer respectivement les valeurs courantes de paramètres de vol. Ces paramètres de vol sont liés à l'avion et sont représentatifs des conditions de déplacement effectives dudit avion ; et
- un moyen 12 qui est relié par l'intermédiaire d'une liaison 13 audit ensemble 1 et qui est formé de manière :
   - à faire varier lesdites première et seconde limites de débattement L1 et L2, et ceci au moins partiellement de façon dissymétrique, en fonction des valeurs courantes desdits paramètres de vol, reçues dudit ensemble 11 de sources d'informations ; et
   - à transmettre les nouvelles valeurs limites de débattement L1 et L2 audit moyen 7 par l'intermédiaire d'une liaison 14 afin que ce dernier les utilise pour déterminer l'ordre de braquage destiné à l'actionneur 9.

Ainsi, le système 1 conforme à l'invention fait varier lesdites première et seconde limites de débattement L1 et L2, et ceci au moins partiellement de façon dissymétrique, en fonction des valeurs courantes de paramètres de vol qui sont représentatifs des conditions de déplacement de l'avion. Par conséquent, ledit système 1 permet d'adapter la plage de débattement de la gouverne de direction 2 (et ainsi l'efficacité de cette dernière) auxdites conditions de déplacement effectives.

Bien que non exclusivement, le système 1 conforme à l'invention est particulièrement avantageux lorsque l'avion roule au sol et qu'il est soumis à un fort vent latéral. Dans ce cas, ledit système 1 déplace plus l'une des limites de débattement (à savoir celle qui est du côté permettant à la gouverne de direction 2 de s'opposer audit vent latéral) de manière à plus augmenter la plage de débattement de la gouverne de direction 2 du côté de cette limite de débattement que de l'autre côté, ce qui permet d'augmenter l'efficacité de la commande de direction de l'avion dans cette situation et de limiter les charges de l'autre côté.

Dans un mode de réalisation particulier, lesdits moyens 7 et 12 font partie d'une unité de calcul 15.

En outre, ledit moyen 12 peut comporter une base de données (non représentée) contenant des courbes de variation C1 et C2 desdites limites de débattement L1 et L2 en fonction des valeurs courantes d'une pluralité de paramètres de vol.

Dans une première variante de réalisation, lesdites courbes de variation sont déterminées de façon empirique, tandis que dans une seconde variante de réalisation, lesdites courbes de variation sont déterminées à l'aide de formules mathématiques dans lesquelles on intègre lesdites valeurs courantes des paramètres de vol.

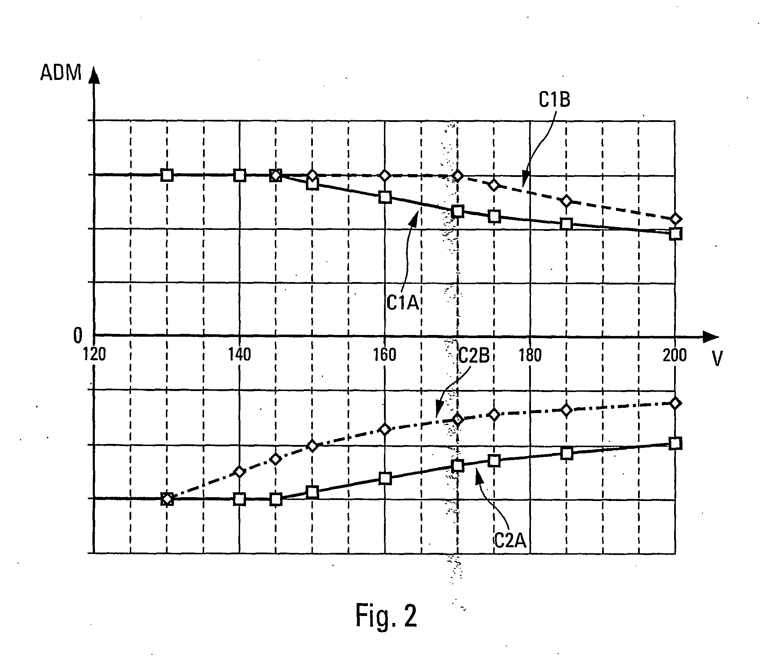

A titre d'illustration, on a représenté sur la figure 2 un angle de débattement maximal ADM (exprimé par exemple en degrés) par rapport à une position neutre, représentant lesdites limites de débattement L1 et L2, en fonction de la vitesse V (exprimée en noeuds, un noeud valant environ 0,5 m/s) de l'avion et de son angle de dérapage β. Plus précisément :
- les courbes C1A et C2A illustrent les variations respectivement desdites limites de débattement L1 et L2 en fonction de la vitesse V, pour un angle de dérapage β négligeable. Ces courbes C1A et C2A sont représentées en traits continus et certaines de leurs valeurs sont mises en évidence par des carrés ; et
- les courbes C1 B et C2B illustrent les variations respectivement desdites limites de débattement L1 et L2 en fonction de la vitesse V, pour un angle de dérapage β significativement positif. Ces courbes C1B et C2B sont représentées en traits interrompus et certaines de leurs valeurs sont mises en évidence par des losanges.

Cette figure 2 met bien en évidence les possibilités (au moins partielles) de variations asymétriques desdites limites de débattement L1 et L2 en fonction des valeurs courantes de paramètres de vol, en l'occurrence la vitesse V et l'angle de dérapage β. Ainsi, les courbes de variation C1B et C2B sont asymétriques. En revanche, les courbes de variation C1 A et C2A restent, quant à elles, symétriques.

Par ailleurs, dans un mode de réalisation particulier, ledit ensemble 11 de sources d'informations comporte au moins certains des moyens usuels suivants :
- un moyen 16A pour déterminer la phase de déplacement de l'avion. Il peut s'agir d'une phase de vol (phase de montée, phase de vol en croisière, ...) ou d'une phase de roulement au sol, par exemple en vue d'un décollage ou à la suite d'un atterrissage ;
- un moyen 16B pour déterminer la vitesse de l'avion ;
- un moyen 16C pour déterminer le nombre de Mach de l'avion ;
- un moyen 16D pour déterminer l'altitude de l'avion ;
- un, moyen 16E pour déterminer la configuration aérodynamique de l'avion ;
- un moyen 16F pour déterminer l'angle de dérapage β de l'avion. Cet angle de dérapage β peut, par exemple, être mesuré au niveau du centre de gravité de l'avion, au niveau de la dérive ou au niveau du nez de l'avion ;
- un moyen 16G pour déterminer la poussée engendrée par les moteurs de l'avion ;
- un moyen 16H pour déterminer les interactions entre les braquages des différentes surfaces de contrôle (plan, profondeur, spoilers) de l'avion ; et
- un moyen 161 pour déterminer la vitesse de lacet de l'avion.

Dans une première variante, ledit moyen 1 2 utilise les valeurs courantes de certains des paramètres de vol précités (phase de déplacement, vitesse, nombre de Mach, altitude, configuration aérodynamique, angle de dérapage, poussée, interaction entre les braquages des différentes surfaces de contrôle, vitesse de lacet), tandis que dans une seconde variante, ledit moyen 12 utilise simultanément les valeurs courantes de tous ces paramètres de vol.

## Revendications

1. . Système de commande électrique pour une gouverne de direction d'un avion, ledit système (1) comportant :
- ladite gouverne de direction (2) qui est montée rotative autour d'un axe (Z-Z) pour pouvoir prendre n'importe quelle position angulaire de braquage à l'intérieur d'une plage de débattement qui est limitée par une première et une seconde limites de débattement ;
- un ensemble (11) de sources d'informations susceptibles d'engendrer respectivement les valeurs courantes de paramètres de vol liés à l'avion ,
- un palonnier (5) qui est susceptible d'être actionné par un pilote de l'avion et qui est associé à un transducteur (6) qui délivre un ordre de pilotage représentatif de l'action du pilote sur ledit palonnier (5) ;
- un premier moyen (7) qui détermine, à partir dudit ordre de pilotage, en tenant compte desdites première et seconde limites de débattement, un ordre de braquage permettant d'amener ladite gouverne de direction (2) à une position située entre lesdites première et seconde limites de débattement et dépendant dudit ordre de pilotage ; et
- un actionneur (9) qui reçoit cet ordre de braquage et qui déplace ladite gouverne de direction (2) autour dudit axe (Z-Z) en fonction dudit ordre de braquage reçu,
**caractérisé en ce qu'**il comporte, de plus, un second moyen (12) pour varier, en fonction des valeurs courantes desdits paramètres de vol qui sont représentatifs de conditions de déplacement effectives de l'avion, lesdites première et seconde limites de débattement et déplacer plus l'une des limites de débattement afin d'augmenter la plage de débattement de la gouverne de direction (2) plus du côté de cette limite de débattement que de l'autre côté, et pour transmettre ces première et seconde limites de débattement audit premier moyen (7).

2. . Système selon la revendication 1,
**caractérisé en ce que** ledit ensemble (11) de sources d'informations comporte au moins certains des moyens suivants :
- un moyen (16A) pour déterminer la phase de déplacement de l'avion ;
- un moyen (16B) pour déterminer la vitesse de l'avion ;
- un moyen (16C) pour déterminer le nombre de Mach de l'avion ;
- un moyen (16D) pour déterminer l'altitude de l'avion ;
- un moyen (16E) pour déterminer la configuration aérodynamique de l'avion ;
- un moyen (16F) pour déterminer l'angle de dérapage de l'avion ;
- un moyen (16G) pour déterminer la poussée engendrée par les moteurs de l'avion ;
- un moyen (16H) pour déterminer des interactions entre des braquages de différentes surfaces de contrôle de l'avion ; et
- un moyen (161) pour déterminer la vitesse de lacet de l'avion.

3. . Système selon l'une des revendications 1 et 2,
**caractérisé en ce que** ledit second moyen (12) comporte une base de données contenant des courbes de variations desdites première et seconde limites de débattement en fonction de valeurs desdits paramètres de vol.

4. . Système selon l'une quelconque des revendications précédentes,
**caractérisé en ce que** lesdits premier et second moyens (7, 12) font partie d'une unité de calcul (15).

5. . Avion,
**caractérisé en ce qu'**il comporte un système de commande (1) tel que celui spécifié sous l'une quelconque des revendications 1 à 4.

## Claims

1. An electric control system for a steering control surface of an aircraft, said system (1) comprising:
- said steering control surface (2) which is mounted rotatably about an axis (Z-Z) so as to be able to take any angular deflection position inside a range of travel which is limited by a first and a second limits of travel;
- a set (11) of information sources capable of generating respectively the current values of flight parameters related to the aircraft;
- a rudder bar (5) which is capable of being actuated by a pilot of the aircraft and which is associated with a transducer (6) which delivers a piloting order representative of the action of the pilot on said rudder bar (5);
- a first means (7) which determines, on the basis of said piloting order, by taking account of said first and second limits of travel, a deflection order making it possible to bring said steering control surface (2) to a position situated between said first and second limits of travel and dependent on said piloting order; and
- an actuator (9) which receives this deflection order and which displaces said steering control surface (2) about said axis (Z-Z) as a function of said deflection order received,
**characterized in that** it comprises, moreover, a second means (12) for varying, as a function of the current values of said flight parameters which are representative of actual displacement conditions of the aircraft, said first and second limits of travel and displacing one of the limits of travel more in such a way as to increase the range of travel of the steering control surface (2) more on the side of this limit of travel than on the other side, and for transmitting these first and second limits of travel to said first means (7).

2. The system as claimed in claim 1,
**characterized in that** said set (11) of information sources comprises at least some of the following means:
- a means (16A) for determining the phase of displacement of the aircraft;
- a means (16B) for determining the speed of the aircraft;
- a means (16C) for determining the Mach number of the aircraft;
- a means (16D) for determining the altitude of the aircraft;
- a means (16E) for determining the aerodynamic configuration of the aircraft;
- a means (16F) for determining the angle of sideslip of the aircraft;
- a means (16G) for determining the thrust generated by the engines of the aircraft;
- a means (16H) for determining interactions between deflections of various control surfaces of the aircraft; and
- a means (161) for determining the yaw rate of the aircraft.

3. The system as claimed in one of claims 1 and 2,
**characterized in that** said second means (12) comprises a database containing curves of variations of said first and second limits of travel as a function of values of said flight parameters.

4. The system as claimed in any one of the preceding claims,
**characterized in that** said first and second means (7, 12) form part of a calculation unit (15).

5. An aircraft,
**characterized in that** it comprises a control system (1) such as that specified under any one of claims 1 to 4.

## Patentansprüche

1. Elektrisches Steuersystem für ein Ruder eines Flugzeugs, wobei das System (1) umfasst:
- das Ruder (2), das drehbar um eine Achse (Z-Z) montiert ist, um jede Ausschlag-Winkelstellung innerhalb eines Ausschlagbereichs annehmen zu können, der von einer ersten und einer zweiten Ausschlaggrenze begrenzt ist;
- eine Gruppe (11) von Informationsquellen, die imstande sind, jeweils die laufenden Flugwertparameter zu erzeugen, die mit dem Flugzeug verbunden sind;
- einen Hebel (5), der imstande ist, von einem Flugzeugpiloten bedient zu werden und der mit einem Umformer (6) verbunden ist, der einen für die Aktion des Piloten auf den Hebel (5) repräsentativen Lenkbefehl ausgibt;
- ein erstes Mittel (7), das ausgehend von dem Lenkbefehl unter Berücksichtigung der ersten und zweiten Ausschlaggrenze einen Ausschlagbefehl bestimmt, der es erlaubt, das Ruder (2) in eine Stellung zu führen, die sich zwischen der ersten und zweiten Ausschlaggrenze befindet und vom Lenkbefehl abhängt; und
- einen Aktuator (9), der diesen Ausschlagbefehl empfängt und der das Ruder (2) um die Achse (Z-Z) in Abhängigkeit von dem empfangenen Ausschlagbefehl bewegt,
**dadurch gekennzeichnet, dass** es weiterhin ein zweites Mittel (12) aufweist, um in Abhängigkeit der laufenden Werte der Flugparameter, die für die tatsächlichen Bewegungsbedingungen des Flugzeugs repräsentativ sind, den ersten und zweiten Ausschlagbefehl zu variieren und eine der Ausschlaggrenzen weiter zu verschieben, um den Ausschlagbereich des Ruders (2) auf der Seite dieser Ausschlaggrenze mehr als auf der anderen Seite zu erhöhen, und um diese erste und zweite Ausschlaggrenze an das erste Mittel (7) zu übertragen.

2. System nach Anspruch 1,
**dadurch gekennzeichnet, dass** die Gruppe (11) von Informationsquellen mindestens einige der folgenden Mittel aufweist:
- ein Mittel (16A), um die Bewegungsphase des Flugzeugs zu bestimmen;
- ein Mittel (16B), um die Geschwindigkeit des Flugzeugs zu bestimmen;
- ein Mittel (16C), um die Anzahl der Mach des Flugzeugs zu bestimmen;
- ein Mittel (16D), um die Höhe des Flugzeugs zu bestimmen;
- ein Mittel (16E), um die aerodynamische Konfiguration des Flugzeugs zu bestimmen;
- ein Mittel (16F), um den Schleuderwinkel des Flugzeugs zu bestimmen;
- ein Mittel (16G), um den von den Flugzeugmotoren erzeugten Schub zu bestimmen;
- ein Mittel (16H), um die Interaktionen zwischen Ausschlägen verschiedener Steuerflächen des Flugzeugs zu bestimmen; und
- ein Mittel (161), um die Giergeschwindigkeit des Flugzeugs zu bestimmen.

3. System nach einem der Ansprüche 1 und 2,
**dadurch gekennzeichnet, dass** das zweite Mittel (12) eine Datenbank aufweist, die die Schwankungskurven der ersten und zweiten Ausschlaggrenze in Abhängigkeit der Werte der Flugparameter enthält.

4. System nach einem der vorangehenden Ansprüche,
**dadurch gekennzeichnet, dass** das erste und zweite Mittel (7, 12) Bestandteil einer Recheneinheit (15) sind.

5. Flugzeug,
**dadurch gekennzeichnet, dass** es ein Steuersystem (1), wie nach einem der Ansprüche 1 bis 4 spezifiziert, umfasst.
